# EUROPÄISCHE PATENTSCHRIFT

(11) **EP 4 015 717 B1**
(45) Veröffentlichungstag und Bekanntmachung des Hinweises auf die Patenterteilung: **01.11.2023**
(21) Anmeldenummer: 21215863.8
(22) Anmeldetag: 20.12.2021
(51) Int. Cl.: E03B 7/07, D06F 39/08, E03C 1/02

(54) **INSTALLATIONSBOX**
INSTALLATION BOX
BOÎTE D'INSTALLATION

(30) Priorität: 21.12.2020 CH 16342020
(43) Veröffentlichungstag der Anmeldung: 22.06.2022
(73) Patentinhaber: HAB Invest AG, 5707 Seengen (CH)
(72) Erfinder: BEYELER, Hermann Alexander, 4133 Pratteln (CH)
(74) Vertreter: Bohest AG

(56) Entgegenhaltungen:
- WO-A2-2011/087247
- CN-A- 106 836 382
- JP-A- 2003 301 488

## Beschreibung

Die vorliegende Erfindung betrifft eine Installationsbox.

Der Anschluss von sanitären Komponenten wie Wasserhähne, Spülbecken, Geschirrwaschmaschinen etc. an das gebäudeseitige Leitungssystem (Steigleitungen und Fallrohre) erfolgt üblicherweise nach dem Einbau dieser Komponenten und gestaltet sich insbesondere aufgrund der oft beengten Platzverhältnisse als relativ arbeitsaufwändig.

Beispielsweise ist das beim Einbau von Küchen sehr häufig der Fall. Üblicherweise sind die Küchenmöbel wie z.B. die Unterbauschränke, aber auch die Spülbecken und die Geschirrwaschmaschinen bereits eingebaut oder untergebaut, bevor die Wasserhähne, Spülbecken, Schläuche der Geschirrwaschmaschinen, etc., vom Installateur mit den gebäudeseitigen Wasseranschlüssen und Abwasseranschlüssen (mit Rohren) verbunden werden. Der Installationsaufwand für den Installateur ist in solchen Fällen in der Regel hoch.

Weiterhin ist es bei Küchen häufig so, dass keinerlei Warnsysteme eingebaut sind, wenn einmal Wasser austritt. Ein Wasseraustritt wird daher häufig erst zu einem Zeitpunkt bemerkt, wenn der durch das ausgetretene Wasser entstandene Schaden schon sehr gross ist, was einerseits die Reparaturen sehr aufwändig und teuer macht und andererseits auch die Prämien für entsprechende Versicherungen gegen solche Wasserschäden steigen lässt. Während solche Wasserschäden bereits bei Einfamilienhäusern recht erheblich sein können, obwohl sie dort nur auf ein Haus/Wohnung beschränkt sind, können diese Schäden in Mehrfamilienwohnanlagen noch erheblich grösser werden. Denn dort kann die Wohnung/können die Wohnungen, die unter derjenigen Wohnung liegen, in welcher der Wasserschaden entsteht, ganz erheblich in Mitleidenschaft gezogen werden, was den Gesamtschaden deutlich vergrössern kann.

Aus den Dokumenten WO2011/087247A, JP2003301488A und CN106836382A sind Installationboxen bekannt, die eine Alarmanlage umfassen.

Aufgabe der vorliegenden Erfindung ist es daher, den Installationsaufwand für die Sanitärinstallationen in Küchen, speziell in Mehrfamilienwohnanlagen, insbesondere in deren Küchen zu reduzieren. Gleichzeitig sollen nach Möglichkeit grössere Wasserschäden verhindert werden.

Diese Aufgabe wird durch die erfindungsgemässe Installationsbox gelöst, wie sie durch die Merkmale des unabhängigen Patentanspruchs spezifiziert ist. Weitere vorteilhafte Aspekte der erfindungsgemässen Installationsbox ergeben sich aus den Merkmalen der abhängigen Patentansprüche.

Insbesondere umfasst die erfindungsgemässe Installationsbox ein Gehäuse sowie erste Leitungsanschlüsse zur Verbindung mit einer gebäudeseitigen Kaltwasserzuleitung sowie einer gebäudeseitigen Warmwasserzuleitung und zur Verbindung mit einer gebäudeseitigen Wasserabfuhrleitung. Ferner umfasst die erfindungsgemässe Installationsbox zweite Leitungsanschlüsse zur Verbindung mit einem Wasserverbraucher (z.B. Wasserhahn) und einer oder mehreren Abwasserquellen (z.B. Beckenauslässe). Die ersten Leitungsanschlüsse der Installationsbox sind über interne Rohrleitungen mit den zweiten Leitungsanschlüssen der Installationsbox verbunden. Ferner umfasst die erfindungsgemässe Installationsbox eine Wasseralarmvorrichtung, welche einen im Innenraum des Gehäuses angeordneten Alarmgenerator aufweist sowie einen aus dem Gehäuse herausragenden, vorzugsweise schlauchförmigen, Fühler. Die Wasseralarmvorrichtung dient dazu, einen Alarm auszulösen, wenn der Fühler mit Wasser in Kontakt kommt.

Die erfindungsgemässe Installationsbox wird vorzugsweise bereits bei der Sanitärplanung eines Wohngebäudes oder eine Wohnanlage mit eingeplant und wird zu einem Zeitpunkt gebäudeseitig in der Küche montiert, bevor die Einbauten in der Küche (Küchenmöbel wie Unterschränke, Spülbecken, Geschirrwaschmaschine) erfolgen. Die Montage der Installationsbox in der Küche erfolgt somit zu einem Zeitpunkt, an dem die gebäudeseitigen Kalt- und Warmwasserzuleitungen sowie die gebäudeseitige Wasserabfuhrleitung (Abwasseranschluss zum Fallrohr) für den Installateur einfach und gut zugänglich sind. Der Installateur kann somit nach der Montage der Installationsbox im unteren Bereich der Küchenwand auf einfache Weise die gebäudeseitigen Anschlüsse mit den ersten Leitungsanschlüssen der Installationsbox verbinden. Da diese ersten Leitungsanschlüsse der Installationsbox mit den zweiten Leitungsanschlüssen der Installationsbox durch die internen Rohrleitungen der Installationsbox verbunden sind, muss der Installateur nach dem Einbau der Küchenmöbel und der Sanitärkomponenten dann lediglich noch die zweiten Leitungsanschlüsse der Installationsbox mit den entsprechenden Anschlüssen des Wasserverbrauchers (z.B. Wasserhahn) und der oder den Abwasserquellen (also z.B. mit einem oder mehreren Beckenauslässen) verbinden. Dies ist aber ebenfalls vergleichsweise einfach möglich, weil diese zweiten Leitungsanschlüsse der Installationsbox gut zugänglich sind. Die erfindungsgemässe Installationsbox bildet somit eine Schnittstelle zwischen dem gebäudeseitigen Leitungssystem der Steigzone/Fallzone und den Sanitärkomponenten der Küche (Wasserhähne, Spülbecken, Geschirrwaschmaschine). Da die erfindungsmässe Installationsbox zu einem frühen Zeitpunkt eingeplant und montiert wird, wird der gesamte Installationsaufwand für den Installateur erheblich verringert. Darüber hinaus ermöglicht die Wasseralarmvorrichtung der erfindungsgemässen Installationsbox, einen allfälligen Wasseraustritt frühzeitig zu erkennen und somit im Falle eines solchen Wasseraustritts schnell reagieren zu können, wodurch ein möglicher Schaden klein gehalten werden kann (z.B. durch Abstellen der Wasserzufuhr). Dies ist insbesondere in Mehrfamilienwohnanlagen von besonderem Vorteil, weil dadurch auch Schäden an anderen (darunter liegenden) Wohnungen der Wohnanlage vermieden werden können.

Gemäss einem Aspekt der Erfindung umfassen die internen Rohrleitungen der Installationsbox eine Kaltwasserrohrleitung und eine Warmwasserrohrleitung. Die Kaltwasserrohrleitung der Installationsbox weist als ersten Leitungsanschluss einen Einlassanschluss und als zweiten Leitungsanschluss einen Auslassanschluss für Kaltwasser auf. Ebenso weist die Warmwasserrohrleitung der Installationsbox als ersten Leitungsanschluss einen Einlassanschluss und als zweiten Leitungsanschluss einen Auslassanschluss für Warmwasser auf. Ferner umfassen die internen Rohrleitungen der Installationsbox eine Abflussrohrleitung, die mit einem Siphon versehen ist. Diese Abflussrohleitung der Installationsbox weist als zweiten Leitungsanschluss einen oder mehrere Einlassanschlüsse für die ein oder mehreren Abwasserquellen (z.B. Beckenauslässe) auf, und als ersten Leitungsanschluss einen Auslassanschluss (Abfluss) für Abwasser.

Gemäss einem weiteren Aspekt der Erfindung ist in der Kaltwasserrohrleitung und der Warmwasserrohrleitung der Installationsbox jeweils ein Absperrventil angeordnet. Dadurch kann im Falle eines Wasseraustritts die Wasserzufuhr auf einfache Weise unterbrochen und weiteres Auslaufen von Wasser verhindert werden.

Gemäss einem weiteren Aspekt der Erfindung weist die Kaltwasserrohrleitung und/oder die Warmwasserrohrleitung der Installationsbox einen zusätzlichen Auslassanschluss für Kalt- bzw. Warmwasser auf. An den zusätzlichen Kaltwasseranschluss kann beispielsweise auf einfache Weise ein Wasserzufuhrschlauch einer Geschirrwaschmaschine angeschlossen werden. Vorteilhafterweise weist auch dieser zusätzliche Auslassanschluss ein Absperrventil auf, so dass der zusätzliche Auslassanschluss im Falle eines Wasseraustritts separat abgesperrt werden kann, aber eben beispielsweise auch abgesperrt werden kann, falls an diesem zusätzlichen Auslassanschluss überhaupt nichts angeschlossen ist.

Gemäss einem weiteren Aspekt der Erfindung umfasst die Abflussrohrleitung der Installationsbox zusätzlich zu dem einen oder den mehreren Einlassanschlüssen (z.B. für den bzw. die Beckenauslässe) des zweiten Leitungsanschlusses noch einen zusätzlichen Einlassanschluss für Abwasser auf, welcher z.B. seitlich an der Abflussrohrleitung angeordnet ist. An diesen zusätzlichen Einlassanschluss kann beispielsweise ein Wasserabfuhrschlauch einer Geschirrwaschmaschine angeschlossen werden.

Gemäss einem weiteren Aspekt der Erfindung ist in der Warmwasserrohrleitung und in der Kaltwasserrohrleitung jeweils eine Wasseruhr (Wasserdurchflusszähler) angeordnet. Dies ermöglicht die Erfassung des Wasserverbrauchs unabhängig von gebäudezentralen Wasserzählern. In Wohnungen kann der Weg von den zentralen Wasseruhren für Warm- und Kaltwasser für die jeweilige Wohnung je nach Raumprogramm der Wohnung sehr unterschiedlich lang sein (z.B. Küche weit entfernt vom Badezimmer und den zentralen Wasseruhren für die jeweilige Wohnung). Das bedeutet insbesondere für Warmwasser, dass aufgrund des langen Wegs von der zentralen Wasseruhr (im Badezimmer) zu dem Wasserverbraucher (Wasserhahn in der Küche) die Ausstosszeit (Zeitdauer, bis aus dem Wasserverbraucher warmes Wasser ausgestossen wird) erheblich zu lange sein kann. Einschlägige Normen (z.B. SIA) schreiben hier zulässige Höchstzeiten (z.B. 7-10 Sekunden) vor, ansonsten müssen separate Steigzonen und separate Wasseruhren vorgesehen werden. Diesem Erfordernis trägt die Installationsbox mit den Wasseruhren Rechnung.

Gemäss einem weiteren Aspekt der Erfindung ist das Gehäuse der Installationsbox mit Öffnungen versehen, durch welche die Auslassanschlüsse der Kaltwasserrohrleitung und der Warmwasserohrleitung der Installationsbox sowie auch die eine die mehreren Einlassanschlüsse der Abflussrohleitung der Installationsbox hindurchragen. Dies ermöglicht es dem Installateur, nach erfolgtem Einbau der Küchenmöbel und der Sanitärkomponenten sowohl den Wasserverbraucher (z.B. Wasserhahn) und die Abwasserquellen (z.B. Beckenauslässe) auf einfache Weise mit den durch die Öffnungen der Installationsbox hindurchragenden Anschlüssen zu verbinden.

Gemäss einem weiteren Aspekt der Erfindung ist das Gehäuse der Installationsbox kastenförmig und zur Montage an einer Gebäudewand (Küchenwand) ausgebildet, wobei das Gehäuse eine Vorderwand, eine Rückwand, zwei Seitenwände und eine Deckelwand aufweist.

Gemäss einem weiteren Aspekt der Erfindung weist eine Seitenwand der zwei Seitenwände des Gehäuses eine Öffnung auf, durch welche hindurch der Auslassanschluss der Abflussrohrleitung der Installationsbox mit einer externen Abflussleitung (z.B. externes Rohr) verbindbar ist. Dadurch ist es möglich, die Installationsbox an der Gebäudewand ausserhalb der Anschlussöffnung des gebäudeseitigen Fallrohrs zu platzieren, wobei die Verbindung zwischen dem Auslassanschluss der Abflussrohrleitung der Installationsbox und der Anschlussöffnung der gebäudeseitigen Wasserabfuhrleitung (Fallrohr) durch die externe Abflussleitung (z.B. externes Rohr) erfolgt.

Gemäss einem anderen Aspekt der Erfindung ist der Auslassanschluss der Abflussrohrleitung der Installationsbox an der Rückwand des Gehäuses angeordnet und direkt mit einer gebäudeseitigen Wasserabfuhrleitung (Fallrohr) bzw. deren Anschlussöffnung verbindbar ausgebildet. Hier kann eine externe Abflussrohrleitung, die zu der Anschlussöffnung der gebäudeseitigen Wasserabfuhrleitung (Fallrohr) führt, entweder ganz entfallen oder nur sehr kurz sein.

Gemäss einem weiteren Aspekt der Erfindung ist die Vorderwand des Gehäuses der Installationsbox abnehmbar ausgebildet (Revisionsdeckel). Dadurch ist z.B. für Service-Arbeiten ein einfacher Zugang zu den innerhalb des Gehäuses befindlichen Komponenten der Installationsbox gewährleistet

Gemäss einem weiteren Aspekt der Erfindung weist die Vorderwand des Gehäuses Fensteröffnungen auf. Durch einige dieser Fensteröffnungen hindurch können beispielsweise die Absperrventile betätigt werden, ohne die Vorderwand des Gehäuses abnehmen zu müssen. Eine andere solche Fensteröffnung kann die Sicht auf die integrierte Wasseralarmvorrichtung ermöglichen. Weitere solche Fensteröffnungen können die Ablesung der Wasseruhren für Kalt- und Warmwasser ermöglichen.

Gemäss einem weiteren Aspekt der Erfindung ist im Gehäuse der Installationsbox auch ein elektrischer Netzspannungsanschluss (oder auch mehrere elektrische Netzspannungsanschlüsse) angeordnet. An einen solchen Netzspannungsanschluss kann z.B. die Geschirrwaschmaschine angeschlossen werden.

Gemäss einem weiteren Aspekt der Erfindung ist der Alarmgenerator der Wasseralarmvorrichtung dazu ausgebildet, einen akustischen oder optischen Alarm auszulösen. Alternativ oder zusätzlich kann er auch dazu ausgebildet sein, eine Alarmmeldung an ein entferntes, mit dem Alarmgenerator der Wasseralarmvorrichtung über einen elektronischen Kommunikationskanal verbundenes Gerät (z.B. Mobiltelefon) zu senden.

Weitere vorteilhafte Aspekte der Erfindung ergeben sich aus der nachfolgenden Beschreibung von Ausführungsbeispielen der erfindungsgemässen Installationsbox mit Hilfe der Zeichnung. Es zeigen:
- Fig. 1: eine teilweise explodierte perspektivische Schrägansicht eines ersten Ausführungsbeispiels der erfindungsgemässen Installationsbox;
- Fig. 2: eine Vorderansicht der erfindungsgemässen Installationsbox aus Fig. 1 mit abgenommener Vorderwand im eingebauten Zustand unter einem Küchenspültisch;
- Fig. 3: eine Seitenansicht der erfindungsgemässen Installationsbox aus Fig. 1 im eingebauten Zustand unter einem Küchenspültisch;
- Fig. 4: eine teilweise explodierte perspektivische Schrägansicht eines zweiten Ausführungsbeispiels der erfindungsgemässen Installationsbox;
- Fig. 5: eine teilweise explodierte perspektivische Schrägansicht eines dritten Ausführungsbeispiels der erfindungsgemässen Installationsbox;
- Fig. 6: eine Vorderansicht der erfindungsgemässen Installationsbox aus Fig. 5 mit abgenommener Vorderwand im eingebauten Zustand unter einem Küchenspültisch; und
- Fig. 7: eine teilweise explodierte perspektivische Schrägansicht eines vierten Ausführungsbeispiels der erfindungsgemässen Installationsbox.

Für die nachstehende Beschreibung gilt die folgende Festlegung: Sind in einer Figur zum Zweck zeichnerischer Eindeutigkeit Bezugszeichen angegeben, aber im unmittelbar zugehörigen Beschreibungsteil nicht erwähnt, so wird auf deren Erläuterung in vorangehenden oder nachfolgenden Beschreibungsteilen verwiesen. Umgekehrt sind zur Vermeidung zeichnerischer Überladung für das unmittelbare Verständnis weniger relevante Bezugszeichen nicht in allen Figuren eingetragen. Hierzu wird auf die jeweils übrigen Figuren verwiesen.

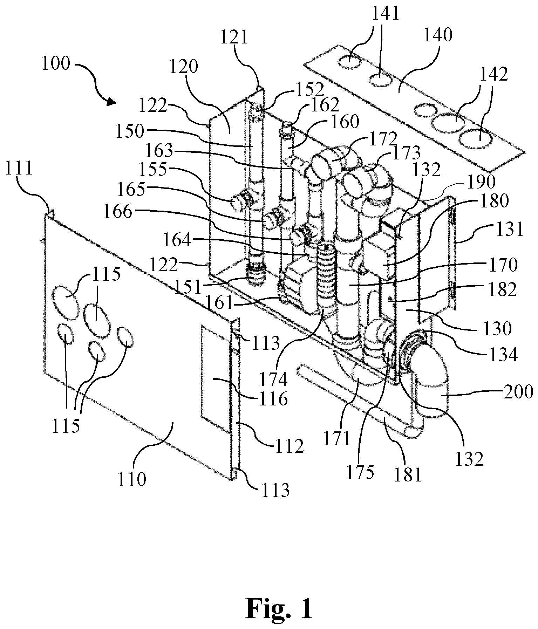

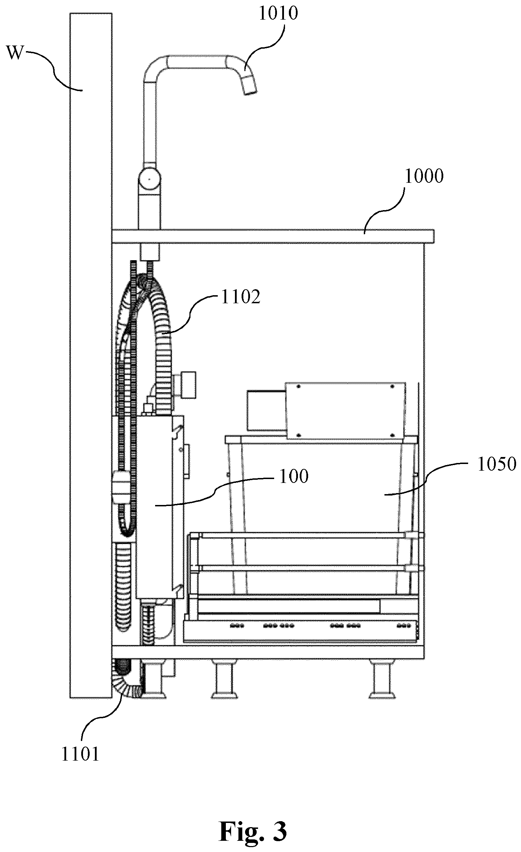

Wie die teilweise explodierte perspektivische Schrägansicht in Fig. 1 zeigt, umfasst die erfindungsgemässe Installationsbox in einem ersten Ausführungsbeispiel ein kastenförmiges Gehäuse 100 mit einer Vorderwand 110, einer Rückwand 190, zwei Seitenwänden 120 und 130 und einer Deckelwand 140. An seiner der Deckelwand 140 (Oberseite) gegenüberliegenden Unterseite ist das Gehäuse 100 offen ausgebildet (kein Boden). Die beiden Seitenwände 120 und 130 (bzw. an diesen Seitenwänden befestigte Bleche) weisen abgewinkelte Laschen 121 bzw. 131 auf, über welche das Gehäuse 100 an einer in Fig. 3 dargestellten Gebäudewand W befestigt werden kann.

Die Vorderwand 110 ist vom Rest des Gehäuses 100 abnehmbar ausgebildet (Revisionsdeckel) und weist dazu in seitlichen abgewinkelten Laschen 111 und 112 schräg verlaufende Schlitze 113 auf, sodass die Vorderwand 110 (Revisionsdeckel) an aus den Seitenwänden 120 und 130 seitlich hervorstehenden Stiften 122 bzw. 132 eingehängt (und entsprechend auch aus diesen ausgehängt) werden kann.

Die Deckelwand 140 (Oberseite des Gehäuses) ist mit Öffnungen 141 und 142 versehen, durch welche innerhalb des Gehäuses 100 angeordnete interne Rohrleitungen, auf die weiter unten noch näher eingegangen wird, hindurchragen. Die Vorderwand 110 weist Fensteröffnungen 115 und 116 auf, durch welche innerhalb des Gehäuses 100 angeordnete Teile der Installationsbox zugänglich bzw. einsehbar sind. Auch darauf wird weiter unten noch näher eingegangen.

Soweit ist das Gehäuse 100 in allen weiter unten beschriebenen Ausführungsbeispielen der erfindungsgemässen Installationsbox gleich ausgebildet und wird deshalb dort nicht nochmals im Detail erläutert.

Die internen Rohrleitungen im Innenraum des Gehäuses 100 der Installationsbox umfassen eine Kaltwasserrohrleitung 160, eine Warmwasserrohrleitung 150 sowie eine Abflussrohrleitung 170. Ferner umfasst die Installationsbox noch eine Wasseralarmvorrichtung, die einen im Innenraum des Gehäuses 100 angeordneten Alarmgenerator 180 aufweist sowie einen aus dem Gehäuse 100 herausragenden, hier schlauchförmigen, Fühler 181.

Die Kaltwasserrohrleitung 160 der Installationsbox umfasst ein gerades Rohrstück, an dessen einem Ende (unteres Ende) ein Einlassanschluss 161 und an dessen anderem Ende (oberes Ende) ein Auslassanschluss 162 vorgesehen ist. Der Auslassanschluss 162 ragt durch eine der Öffnungen 141 der Deckelwand 140 hindurch. Der Einlassanschluss 161 befindet sich im Bereich der offenen Unterseite des Gehäuses 100. Ferner weist die Kaltwasserrohrleitung 160 noch ein Absperrventil 165 auf, welches in der Kaltwasserrohleitung 160 angeordnet ist. In der Nähe des Auslassanschlusses 162 zweigt im Innenraum des Gehäuses 100 ein Rohrstück 163 ab, dessen freies Ende als zusätzlicher Auslassanschluss 164 ausgebildet ist. In dem abgezweigten Rohrstück 163 ist ein zusätzliches Absperrventil 166 angeordnet ist, welches zum Absperren des zusätzlichen Auslassanschlusses 164 dient.

In analoger Weise umfasst die Warmwasserrohrleitung 150 der Installationsbox ein gerades Rohrstück, an dessen einem Ende (unteres Ende) ein Einlassanschluss 151 und an dessen anderem Ende (oberes Ende) ein Auslassanschluss 152 ausgebildet ist. Der Auslassanschluss 152 ragt ebenfalls durch eine der Öffnungen 141 der Deckelwand 140 hindurch. Der Einlassanschluss 151 befindet sich im Bereich der offenen Unterseite des Gehäuses 100. Ferner weist die Warmwasserrohrleitung 150 noch ein Absperrventil 155 auf, welches in der Warmwasserrohrleitung angeordnet ist.

Die Absperrventile 155, 165 und 166 sind durch die Öffnungen 115 in der Vorderwand 110 des Gehäuses 100 zugänglich, ohne dass dazu die Vorderwand (Revisionsdeckel) abgenommen werden muss.

Die Abflussrohrleitung 170 umfasst ein gerades und ein daran anschliessendes gekrümmtes Rohrstück, wobei letzteres einen Siphon 171 bildet. Am oberen Ende der Abflussrohrleitung 170 sind zwei Einlassanschlüsse 172 und 173 ausgebildet (zum Anschliessen der Beckenauslässe), die beide in das gerade Rohrstück der Abflussrohrleitung 170 münden. Knapp oberhalb des Siphons 171 ist im Innenraum des Gehäuses 100 im geraden Rohrstück der Abflussrohrleitung 170 ein weiterer Einlassanschluss 174 angeordnet (zum Anschliessen des Abwasserschlauchs der Geschirrwaschmaschine). Am siphonseitigen Ende der Abflussrohrleitung 170 ist ein Auslassanschluss 175 ausgebildet. Die beiden Einlassanschlüsse 172 und 173 (für die Beckenauslässe) ragen durch die Öffnungen 142 aus der Deckelwand 140 des Gehäuses 100 heraus.

Die batterie- oder vorzugsweise netzspannungsgespeiste Wasseralarmvorrichtung umfasst einen im Innenraum des Gehäuses 100 angeordneten Alarmgenerator 180 und einen schlauchförmig ausgebildeten Fühler 181 auf, der unten aus dem Gehäuse 100 herausgeführt ist, so dass er im montierten Zustand der Installationsbox auf dem Boden der Küche aufliegt (z.B. nahe der Fussbodenleiste). Der Alarmgenerator 180 der Wasseralarmvorrichtung ist dazu ausgebildet, einen Alarm auszulösen, wenn der Fühler 181 mit Wasser in Kontakt kommt. Dieser Alarm kann optisch (Lichtsignal) oder akustisch (Ton) sein oder alternativ oder zusätzlich auch in einer Alarmmeldung bestehen, die der Alarmgenerator 180 der Wasseralarmvorrichtung an ein entferntes, mit ihr über einen elektronischen Kommunikationskanal verbundenes Gerät sendet. Das Gerät kann z.B. ein Mobiltelefon oder eine stationäre Empfangsanlage eines Mieters, eines Vermieters oder eines Hausmeisterdiensts sein, sodass rasch reagiert und ein grösserer Wasserschaden vermieden werden kann. Wasseralarmvorrichtungen dieser Art sind kommerziell erhältlich und bedürfen deshalb keiner näheren Erläuterungen. Der Alarmgenerator 180 ist durch das Fenster 116 in der Vorderwand 110 (Revisionsdeckel) des Gehäuses 100 einsehbar.

Im Gehäuse 100 ist ferner noch ein Netzspannungsanschluss 182 (Steckdose) oder auch mehrere solcher Netzspannungsanschlüsse angeordnet, an den beliebige elektrische Geräte, insbesondere eine Geschirrwaschmaschine angeschlossen werden können. Der Netzspannungsanschluss ist im montierten Zustand der Installationsbox mit einer gebäudeseitigen Netzspannungsversorgung (elektrische Leitungen) verbunden. Die Verbindung eines elektrischen Geräts (z.B. der Geschirrwaschmaschine mit dem Netzspannungsanschluss 182 kann auch durch das Fenster 116 in der Vorderwand 110 des Gehäuses 100 hindurch erfolgen (Einstecken des Steckers des elektrischen Geräts, z.B. der Geschirrwaschmaschine, in die Steckdose durch das Fenster 116 hindurch).

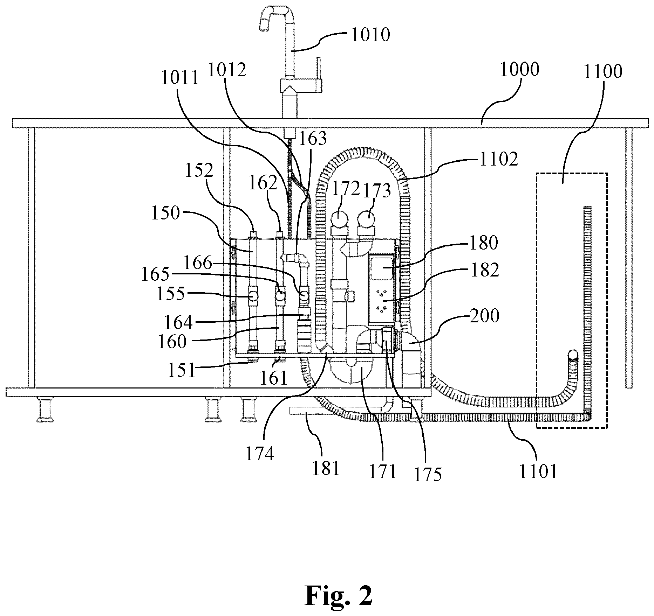

Die Fig. 2 zeigt etwas schematisiert, wie die Installationsbox in einem Küchenspültisch 1000 unter einem am Spültisch vorgesehenen Wasserhahn 1010 (Wasserverbraucher) angeordnet bzw. montiert ist. Zwei Zufuhrleitungen 1011 und 1012 des Wasserhahns 1010 führen (hier nicht dargestellt) zu den Auslassanschlüssen 152 und 162 der Warmwasserrohrleitung 150 bzw. der Kaltwasserrohrleitung 160 der Installationsbox. Ebenfalls nicht dargestellt ist die Verbindung der beiden Einlassanschlüsse 151 und 161 der Warmwasserrohrleitung 150 bzw. der Kaltwasserrohrleitung 160 der Installationsbox mit den entsprechenden gebäudeseitigen Wasserzufuhranschlüssen (Steigrohren). Die Abflussleitungen von den Beckenauslässen von zwei hier nicht dargestellten Spülbecken bzw. eines Spül- und eines Abtropfbeckens sind an die beiden Einlassanschlüsse 172 und 173 der Abflussrohrleitung 170 der Installationsbox angeschlossen (hier ebenfalls nicht dargestellt). An den Auslassanschluss 175 der Abflussrohrleitung 170 der Installationsbox ist eine externe Abflussleitung 200 (z.B. Abwasserrohr) angeschlossen, die zur Anschlussöffnung einer gebäudeseitigen Wasserabfuhrleitung (Fallrohr) führt, um das Abwasser abzuführen.

In Fig. 2 ist eine Geschirrwaschmaschine 1100 schematisch angedeutet (gestricheltes Rechteck), die in der Realität natürlich unter die Arbeitsplatte untergebaut ist und den dort vorhandenen Raum vollständig ausfüllt. Aus zeichnerischen Gründen (bessere Erkennbarkeit der Wasserzufuhr und Abfuhr) ist die Geschirrwaschmaschine 1100 hier lediglich durch das gestrichelte Rechteck schematisch angedeutet. Die Geschirrwaschmaschine weist einen flexiblen Wasserzufuhrschlauch 1101 und einen flexiblen Wasserabfuhrschlauch 1102 auf. Der Wasserabfuhrschlauch 1102 der Geschirrwaschmaschine 1100 ist an den zusätzlichen Einlassanschluss 174 der Abflussrohrleitung 170 angeschlossen, der im Innenraum des Gehäuses 100 der Installationsbox angeordnet ist. Der Wasserzufuhrschlauch 1101 der Geschirrwaschmaschine 1100 ist an den zusätzlichen Auslassanschluss 164 der Kaltwasserrohrleitung 160 angeschlossen, der ebenfalls im Innenraum des Gehäuses 100 der Installationsbox angeordnet ist.

Die Fig. 3 zeigt eine Seitenansicht des Spültischs 1000 mit der an der Wand W montierten Installationsbox. Zusätzlich zu den schon in Fig. 2 gezeigten Elementen ist hier noch ein Abfallbehältersystem 1050 dargestellt, wie es typischerweise in Spültischen verbaut ist.

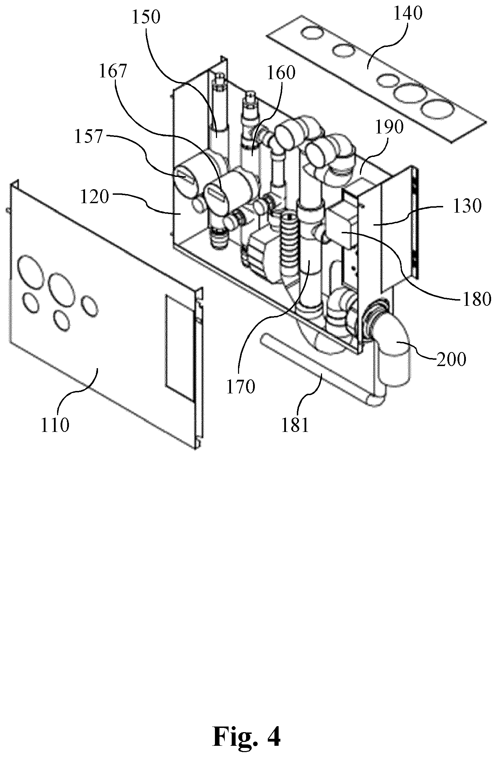

In Fig. 4 ist ein zweites Ausführungsbeispiel der erfindungsgemässen Installationsbox dargestellt. Es ist bis auf eine einzige Ausnahme baugleich mit dem in den Figuren 1 bis 3 dargestellten Ausführungsbeispiel. Gleiche Elemente sind daher mit denselben Bezugsziffern bezeichnet.

Die genannte Ausnahme besteht darin, dass in der Kaltwasserrohrleitung 160 und in der Warmwasserrohrleitung 150 jeweils eine Wasseruhr 167 bzw. 157 (Wasserdurchflusszähler) angeordnet ist.

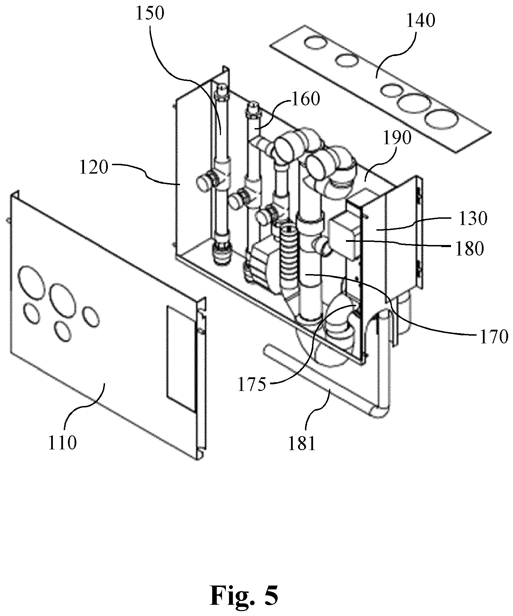

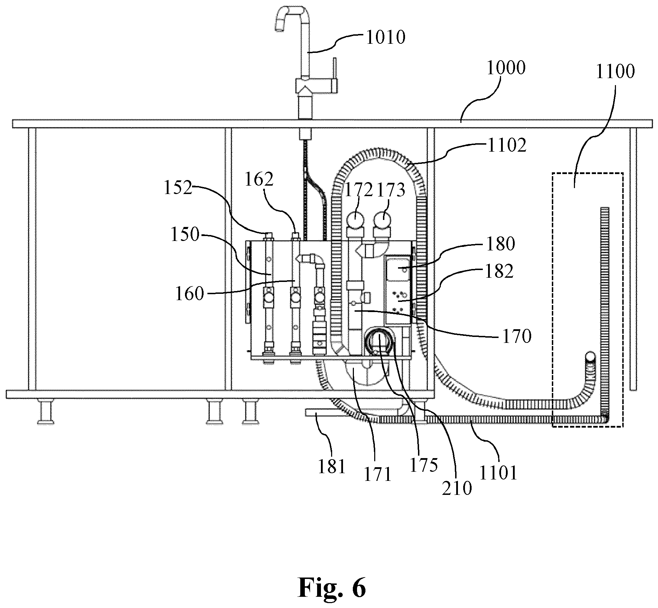

Die Figuren 5 und 6 zeigen ein drittes Ausführungsbeispiel der erfindungsgemässen Installationsbox. Dieses Ausführungsbeispiel ist bis auf eine einzige Ausnahme baugleich mit dem in den Figuren 1 bis 3 dargestellten ersten Ausführungsbeispiel. Gleiche Elemente sind daher mit denselben Bezugsziffern bezeichnet.

Die genannte Ausnahme besteht in der Anordnung bzw. Orientierung des Auslassanschlusses 175 der Abflussrohrleitung 170. Während der Auslassanschluss 175 beim ersten Ausführungsbeispiel zur Öffnung 134 in der Seitenwand 130 des Gehäuses 100 zeigt (siehe Fig. 1), zeigt der Auslassanschluss 175 bei diesem dritten Ausführungsbeispiel zur einer Öffnung in der Rückwand 190 des Gehäuses 100 und ist dazu ausgebildet, direkt mit der Anschlussöffnung einer gebäudeseitigen Wasserabfuhrleitung (Fallrohr) verbunden zu werden, so dass eine separate externe Abflussleitung (wie die in Fig. 2 und Fig. 4 gezeigte externe Abflussleitung 200) im Wesentlichen entfallen kann (bzw. lediglich als extrem kurzes Rohrstück ausgebildet sein kann).

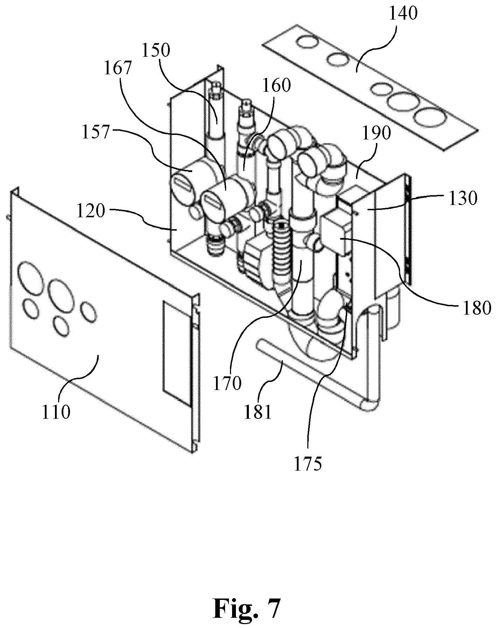

In Fig. 7 ist schliesslich ein viertes Ausführungsbeispiel der erfindungsgemässen Installationsbox dargestellt. Dieses ist bis auf eine einzige Ausnahme baugleich mit dem in den Figuren 5 und 6 dargestellten dritten Ausführungsbeispiel der Installationsbox. Gleiche Elemente sind daher mit denselben Bezugsziffern bezeichnet.

Die genannte Ausnahme besteht darin, dass analog dem in Fig. 4 dargestellten zweiten Ausführungsbeispiel der Installationsbox in der Kaltwasserrohrleitung 160 und der Warmwasserrohrleitung 150 jeweils eine Wasseruhr 167 bzw. 157 (Wasserdurchflusszähler) angeordnet ist.

Die erfindungsgemässe Installationsbox wird in der Praxis in die jeweilige Küche eingebaut, noch bevor Küchenschränke, Spülbecken, etc., eingebaut werden, also zu einem Zeitpunkt, zu dem nur die Anschlüsse aus den gebäudeseitigen Steigleitungen und Fallrohren vorhanden sind. Die Installationsbox enthält alle Komponenten, die für eine betriebssichere Installation erforderlich oder vorteilhaft sind. Dazu gehören mehrfache Anschlussmöglichkeiten für Wasserverbraucher, Geschirrwaschmaschine, etc., Absperrventile und ggf. auch Wasseruhren sowie eine Wasseralarmvorrichtung. Der Sanitärinstallateur muss dann, nach Einbau der Installationsbox, nur noch die Rohrverbindungen zwischen der Installationsbox und den gebäudeseitigen Zufuhr- und Abflussanschlüssen (Steigleitungen für Kalt- und Warmwasser sowie Fallrohr für Abwasser) einerseits und die Rohrverbindungen von der Installationsbox zu den anzuschliessenden Sanitärkomponenten (Wasserhähne, Spülbecken, Geschirrwaschmaschine) anderseits herstellen. Diese Rohrverbindungen können bei entsprechender Planung relativ kurz sein und werden vor allen Dingen zu einem Zeitpunkt installiert, zu dem alle Anschlüsse gut zugänglich sind, sodass der Installationsaufwand für den Installateur vergleichsweise gering ist.

Die erfindungsgemässe Installationsbox ist auch insofern von Vorteil, als sie standardmässig in den Küchen von Häusern und Mehrfamilienwohnanlagen eingeplant werden kann, sodass auch die erforderlichen Steigzonen (für die Steigleitungen) und die Fallrohre (für das Abwasser) frühzeitig entsprechend in die Planung einfliessen können.

Die Erfindung wurde vorstehend anhand von Ausführungsbeispielen erläutert, soll jedoch nicht auf diese Ausführungsbeispiele beschränkt sein. So ist zum Beispiel die erfindungsgemässe Installationsbox nicht nur für Küchen geeignet, sondern auch könnte auch in andere Sanitärräume wie Badezimmer und Toiletten zum Einsatz kommen. Der Schutzbereich wird daher durch die nachstehenden Patentansprüche definiert.

## Patentansprüche

1. Installationsbox mit einem Gehäuse (100), sowie mit ersten Leitungsanschlüssen (151, 161, 175) zur Verbindung mit einer gebäudeseitigen Kaltwasserzuleitung sowie einer gebäudeseitigen Warmwasserzuleitung und zur Verbindung mit einer gebäudeseitigen Wasserabfuhrleitung, sowie mit zweiten Leitungsanschlüssen (152, 162, 164, 172, 173, 174) zur Verbindung mit einem Wasserverbraucher und einer oder mehreren Abwasserquellen, wobei die ersten Leitungsanschlüsse (151, 161, 175) über interne Rohrleitungen (150, 160, 170) mit den zweiten Leitungsanschlüssen (152, 162, 164, 172, 173, 174) verbunden sind, und ferner mit einer Wasseralarmvorrichtung,
**dadurch gekennzeichnet, dass**
die Wasseralarmvorrichtung einen im Innenraum des Gehäuses (100) angeordneten Alarmgenerator (180) aufweist sowie einen aus dem Gehäuse (100) herausragenden, vorzugsweise schlauchförmigen Fühler (181), um einen Alarm auszulösen, wenn der Fühler (181) mit Wasser in Kontakt kommt.

2. Installationsbox nach Anspruch 1, wobei die internen Rohrleitungen eine Kaltwasserrohrleitung (160) und eine Warmwasserrohrleitung (150) umfassen, wobei die Kaltwasserrohrleitung (160) als ersten Leitungsanschluss einen Einlassanschluss (161) und als zweiten Leitungsanschluss einen Auslassanschluss (162) für Kaltwasser und die Warmwasserrohrleitung (150) als ersten Leitungsanschluss einen Einlassanschluss (151) und als zweiten Leitungsanschluss einen Auslassanschluss (152) für Warmwasser aufweist, und wobei die internen Rohrleitungen ferner eine Abflussrohrleitung (170) umfassen, die mit einem Siphon (171) versehen ist und die als zweiten Leitungsanschluss einen oder mehrere Einlassanschlüsse (172, 173) für die ein oder mehreren Abwasserquellen und als ersten Leitungsanschluss einen Auslassanschluss (175) für Abwasser aufweist.

3. Installationsbox nach Anspruch 2, wobei in der Kaltwasserrohrleitung (160) und in der Warmwasserrohrleitung (150) jeweils ein Absperrventil (165, 155) angeordnet ist.

4. Installationsbox nach einem der Ansprüche 2 oder 3, wobei die Kaltwasserrohrleitung (160) und/oder die Warmwasserrohrleitung (150) einen zusätzlichen Auslassanschluss (164) für Kalt- bzw. Warmwasser aufweist.

5. Installationsbox nach Anspruch 4, wobei der zusätzliche Auslassanschluss (164) für das Kalt- bzw. Warmwasser ein zusätzliches Absperrventil (166) aufweist.

6. Installationsbox nach einem der Ansprüche 2 bis 5, wobei die Abflussrohrleitung (170) zusätzlich zu dem einen oder den mehreren Einlassanschlüssen (172, 173) des zweiten Leitungsanschlusses einen weiteren zusätzlichen Einlassanschluss (174) für Abwasser umfasst.

7. Installationsbox nach einem der Ansprüche 2 bis 6, wobei in der Warmwasserrohrleitung (150) und in der Kaltwasserrohrleitung (160) jeweils eine Wasseruhr (167, 157) angeordnet ist.

8. Installationsbox nach einem der Ansprüche 2 bis 7, wobei das Gehäuse (100) mit Öffnungen (141, 142) versehen ist, durch welche die Auslassanschlüsse (162, 152) der Kaltwasserrohrleitung (160) und der Warmwasserrohrleitung (150) sowie der eine oder die mehreren Einlassanschlüsse (172, 173) der Abflussrohrleitung (170) hindurchragen.

9. Installationsbox nach einem der Ansprüche 1 bis 8, wobei das Gehäuse (100) kastenförmig und zur Montage an einer Gebäudewand ausgebildet ist, und wobei das Gehäuse (100) eine Vorderwand (110), eine Rückwand (190), zwei Seitenwände (120, 130) und eine Deckelwand (140) aufweist.

10. Installationsbox nach Anspruch 2 und Anspruch 9, wobei eine Seitenwand (130) der zwei Seitenwände (120, 130) des Gehäuses (100) eine Öffnung (134) aufweist, durch welche hindurch der Auslassanschluss (175) der Abflussrohrleitung (170) mit einer externen Abflussleitung (200) verbindbar ist.

11. Installationsbox nach Anspruch 2 und Anspruch 9, wobei der Auslassanschluss (175) der Abflussrohrleitung (170) an der Rückwand (190) des Gehäuses (100) angeordnet und direkt mit der gebäudeseitigen Wasserabfuhrleitung verbindbar ausgebildet ist.

12. Installationsbox nach einem der Ansprüche 9 bis 11, wobei die Vorderwand (110) des Gehäuses (100) abnehmbar ausgebildet ist.

13. Installationsbox nach einem der vorangehenden Ansprüche, wobei die Installationsbox ferner einen im Gehäuse (100) angeordneten Netzspannungsanschluss (182) umfasst.

14. Installationsbox nach einem der vorangehenden Ansprüche, wobei der Alarmgenerator (180) der Wasseralarmvorrichtung dazu ausgebildet ist, einen akustischen oder optischen Alarm auszulösen oder eine Alarmmeldung an ein entferntes, mit dem Alarmgenerator (180) über einen elektronischen Kommunikationskanal verbundenes Gerät zu senden.

## Claims

1. An installation box having a housing (100), first pipe ports (151, 161, 175) for connection to a building cold water supply pipe and a building hot water supply pipe and for connection to a building water discharge pipe, and second pipe ports (152, 162, 164, 172, 173, 174) for connection to a water consumer and one or more waste water sources, wherein the first pipe ports (151, 161, 175) are connected to the second pipe ports (152, 162, 164, 172, 173, 174) via internal piping (150, 160, 170), and further comprising a water alarm device,
**characterized in that** the water alarm device has an alarm generator (180) arranged in the interior space of the housing (100) and a preferably tubular sensor (181) projecting from the housing (100) for triggering an alarm when the sensor (181) comes into contact with water.

2. Installation box according to claim 1, wherein said internal piping comprises a cold water pipe (160) and a hot water pipe (150), wherein said cold water pipe (160) has as a first pipe port an inlet port (161) and as a second pipe port an outlet port (162) for cold water, and wherein said hot water pipe (150) has as a first pipe port an inlet port (151) and as a second pipe port an outlet port (152) for hot water, and wherein said internal piping further comprises a drain pipe (170) provided with a siphon (171) and having as a second pipe port one or more inlet ports (172, 173) for the one or more sources of waste water and as a first pipe port an outlet port (175) for waste water.

3. Installation box according to claim 2, wherein a shut-off valve (165, 155) is arranged in each of the cold water pipe (160) and the hot water pipe (150).

4. Installation box according to any one of claims 2 or 3, wherein the cold water pipe (160) and/or the hot water pipe (150) has an additional outlet port (164) for cold or hot water, respectively.

5. Installation box according to claim 4, wherein the additional outlet port (164) for the cold or hot water has an additional shut-off valve (166).

6. Installation box according to any one of claims 2 to 5, wherein the drain pipe (170) comprises another additional inlet port (174) for waste water in addition to the one or more inlet ports (172, 173) of the second pipe port.

7. Installation box according to any one of claims 2 to 6, wherein a water meter (167, 157) is arranged in each of the hot water pipe (150) and the cold water pipe (160).

8. Installation box according to any one of claims 2 to 7, wherein the housing (100) is provided with openings (141, 142) through which the outlet ports (162, 152) of the cold water pipe (160) and the hot water pipe (150) and the one or more inlet ports (172, 173) of the drain pipe (170) protrude.

9. Installation box according to any one of claims 1 to 8, wherein the housing (100) is box-shaped and designed for mounting to a building wall, and wherein the housing (100) has a front wall (110), a back wall (190), two side walls (120, 130), and a lidding wall (140).

10. Installation box according to claim 2 and claim 9, wherein one side wall (130) of the two side walls (120, 130) of the housing (100) has an opening (134) through which the outlet port (175) of the drain pipe (170) is connectable to an external drain pipe (200).

11. Installation box according to claim 2 and claim 9, wherein the outlet port (175) of the drain pipe (170) is arranged on the back wall (190) of the housing (100) and is designed to be directly connectable to the water drain pipe on the building side.

12. Installation box according to any one of claims 9 to 11, wherein the front wall (110) of the housing (100) is designed to be removable.

13. Installation box according to any one of the preceding claims, wherein the installation box further comprises a mains voltage connector (182) disposed in the housing (100).

14. Installation box according to any one of the preceding claims, wherein the alarm generator (180) of the water alarm device is designed to trigger an acoustic or visual alarm, or to send an alarm message to a remote device connected to the alarm generator (180) via an electronic communication channel.

## Revendications

1. Boîte d'installation comprenant un boîtier (100), et comprenant des premiers raccords de conduites (151, 161, 175) destinés au raccordement à une conduite d'arrivée d'eau froide côté bâtiment ainsi qu'à une conduite d'arrivée d'eau chaude côté bâtiment, et au raccordement à une conduite d'évacuation d'eau côté bâtiment, et comprenant des deuxièmes raccords de conduites (152, 162, 164, 172, 173, 174) destinés au raccordement à un consommateur d'eau et une ou plusieurs sources d'eaux usées, les premiers raccords de conduites (151, 161, 175) étant reliés par des conduites (150, 160, 170) internes aux deuxièmes raccords de conduites (152, 162, 164, 172, 173, 174), et comprenant par ailleurs un dispositif d'alarme-eau,
**caractérisée en ce que**
le dispositif d'alarme-eau présente un générateur d'alarme (180) disposé à l'intérieur du boîtier (100), ainsi qu'un capteur (181), de préférence en forme de tube, qui dépasse du boîtier (100) pour déclencher une alarme lorsque le capteur (181) entre en contact avec de l'eau.

2. Boîte d'installation selon la revendication 1, dans laquelle les conduites internes comprennent un conduit d'eau froide (160) et un conduit d'eau chaude (150), le conduit d'eau froide (160) présentant un raccord d'entrée (161) en tant que premier raccord de conduit et un raccord de sortie (162) d'eau froide en tant que deuxième raccord de conduit, et le conduit d'eau chaude (150) présente un raccord d'entrée (151) en tant que premier raccord de conduit et un raccord de sortie (152) d'eau chaude en tant que deuxième raccord de conduit, et les conduites internes comprenant en outre un conduit d'évacuation (170) qui est pourvu d'un siphon (171) et qui présente, en tant que deuxième raccord de conduit, un ou plusieurs raccords d'entrée (172, 173) pour la ou les sources d'eaux usées et, en tant que premier raccord de conduit, un raccord de sortie (175) pour les eaux usées.

3. Boîte d'installation selon la revendication 2, dans laquelle une vanne d'arrêt (165, 155) est prévue respectivement dans le conduit d'eau froide (160) et dans le conduit d'eau chaude (150).

4. Boîte d'installation selon l'une des revendications 2 ou 3, dans laquelle le conduit d'eau froide (160) et/ou le conduit d'eau chaude (150) présente(nt) un raccord de sortie (164) supplémentaire pour de l'eau froide ou de l'eau chaude.

5. Boîte d'installation selon la revendication 4, dans laquelle le raccord de sortie (164) supplémentaire pour l'eau froide ou l'eau chaude présente une vanne d'arrêt (166) supplémentaire.

6. Boîte d'installation selon l'une des revendications 2 à 5, dans laquelle le conduit d'évacuation (170) comprend un raccord d'entrée (174) supplémentaire pour des eaux usées, en plus du ou des raccords d'entrée (172, 173) du deuxième raccord de conduit.

7. Boîte d'installation selon l'une des revendications 2 à 6, dans laquelle un compteur d'eau (167, 157) est disposé respectivement dans le conduit d'eau chaude (150) et dans le conduit d'eau froide (160).

8. Boîte d'installation selon l'une des revendications 2 à 7, dans laquelle le boîtier (100) est pourvu d'ouvertures (141, 142) à travers lesquelles passent les raccords de sortie (162, 152) du conduit d'eau froide (160) et du conduit d'eau chaude (150) ainsi que le ou les raccords d'entrée (172, 173) du conduit d'évacuation (170).

9. Boîte d'installation selon l'une des revendications 1 à 8, dans laquelle le boîtier (100) est réalisé sous forme de caisson et est conçu pour le montage sur une paroi de bâtiment et dans laquelle le boîtier (100) présente une paroi avant (110), une paroi arrière (190), deux parois latérales (120, 130) et une paroi formant couvercle (140).

10. Boîte d'installation selon la revendication 2 et la revendication 9, dans laquelle une paroi latérale (130) parmi les deux parois latérales (120, 130) du boîtier (100) présente une ouverture (134) à travers laquelle le raccord de sortie (175) du conduit d'évacuation (170) peut être relié à un conduit d'évacuation (200) externe.

11. Boîte d'installation selon la revendication 2 et la revendication 9, dans laquelle le raccord de sortie (175) du conduit d'évacuation (170) est disposé sur la paroi arrière (190) du boîtier (100) et est réalisé de manière à pouvoir être relié directement au conduit d'évacuation d'eau côté bâtiment.

12. Boîte d'installation selon l'une des revendications 9 à 11, dans laquelle la paroi avant (110) du boîtier (100) est réalisée de manière amovible.

13. Boîte d'installation selon l'une des revendications précédentes, dans laquelle la boîte d'installation comprend en outre une borne de tension de réseau (182) disposée dans le boîtier (100).

14. Boîte d'installation selon l'une des revendications précédentes, dans laquelle le générateur d'alarme (180) du dispositif d'alarme-eau est réalisé pour déclencher une alarme acoustique ou optique ou envoyer un message d'alarme à un appareil situé à distance et relié au générateur d'alarme (180), par l'intermédiaire d'un canal de communication électronique.
